# EUROPÄISCHE PATENTANMELDUNG

(11) **EP 3 051 779 A1**
(43) Veröffentlichungstag der Anmeldung: **03.08.2016**
(21) Anmeldenummer: 15153093.8
(22) Anmeldetag: 29.01.2015
(51) Int. Cl.: H04L 29/12, H04L 12/40

(54) **Verfahren zur funktional sicheren Verbindungsidentifizierung und Kommunikationssystem**

(71) Anmelder: Siemens Aktiengesellschaft, 80333 München (DE)
(72) Erfinder: Barthel, Herbert, 91074 Herzogenaurach (DE); Walter, Maximilian, 90408 Nürnberg (DE); Schmauss, Wolfgang, 90607 Rückersdorf (DE); Sigwart, Edgar, 92224 Amberg (DE)

(57) **Zusammenfassung**

Die Erfindung betrifft ein Verfahren zur funktional sicheren Verbindungsidentifizierung zwischen zwei Kommunikationsteilnehmern (1,2) in einem Kommunikationssystem (10), wobei für eine Kommunikationsverbindung (21) zwischen einem ersten Teilnehmer (1) und einem zweiten Teilnehmer (2) ein Verbindungsdatensatz (30) erzeugt wird, welcher zumindest eine Adresskennung (CN) des zweiten Teilnehmers (2) enthält, wobei zusätzlich zur Adresskennung (CN) des zweiten Teilnehmers (2) eine zufällig generierte Identifikationsnummer (RID) erzeugt wird und der Adresskennung (CN) des zweiten Teilnehmers (2) in dem Verbindungsdatensatz (30) zugeordnet wird, wobei die Adresskennung (CN) und die Identifikationsnummer (RID) zusammen als eine globale Adresse (GA) für den zweiten Teilnehmer (2) genutzt werden.

## Beschreibung

Die Erfindung betrifft ein Verfahren zur funktional sicheren Verbindungsidentifizierung zwischen zwei Kommunikationsteilnehmern in einem Kommunikationssystem, wobei für eine Kommunikationsverbindung zwischen einem ersten Teilnehmer und einem zweiten Teilnehmer ein Verbindungsdatensatz erzeugt wird, welcher zumindest eine Adresskennung des zweiten Teilnehmers enthält.

Im Sinne der Erfindung wird unter funktionaler Sicherheit die Definition gemäß der Norm IEC 61508 verstanden.

Bisher wurde durch technische oder organisatorische Maßnahmen sichergestellt, dass bei einer sicheren Verbindungsidentifizierung zwischen zwei Kommunikationsteilnehmern in einem Kommunikationssystem ein Telegramm ein lokales Netz des Kommunikationssystems nicht verlassen kann. Innerhalb des lokalen Netzes des Kommunikationssystems wurden dazu Adresskennungen eindeutig vergeben. In einem Anwendungsfall für Serienmaschinen müssen im Kommunikationsnetz zwischen Serienmaschinen Netztrenner installiert werden, die dafür sorgen, dass die Telegramme das lokale Netz nicht verlassen können.

In der EP 2 161 638 B2 wird ein Automatisierungssystem und ein Gerät zur Verwendung in einem Automatisierungssystem und ein Verfahren zum Betreiben eines Automatisierungssystems vorgestellt. Die Erfindung gemäß der EP 2 161 638 B2 zielt insbesondere auf eine sicherheitsgerichtete Kommunikation über Feldbussysteme in der Automatisierungstechnik ab.

Die Systembeschreibung "PROFIsafe Systembeschreibung, Technologie und Anwendung", Version November 2010, Bestell-Nr,. 4.3.4.1, Herausgeber PROFIBUS Nutzerorganisation e.V. (PNO) beschreibt die Realisierung einer sicherheitsgerichteten Kommunikation und insbesondere einer sicheren Verbindungsidentifizierung bei PROFIBUS und PROFINET Protokollen.

Auch das Handbuch "SIMATIC, Industrie Software S7 F/FH Systems - Projektieren und Programmieren", Ausgabe 05/2009, A5E00048979-06 beschreibt eine sicherheitsgerichtete Kommunikation, insbesondere bei SIMATIC Steuerungen.

All den genannten und aufgezeigten bekannten Verfahren zur sicherheitsgerichteten Kommunikation, insbesondere in der Automatisierungstechnik, ist gemeinsam, dass die Adressbeziehung, umfassend Ziel- und Quelladresse, beispielsweise von PROFIBUS oder PROFINET Teilnehmern, netzweit eindeutig sein muss.

Als Beispiel sei das Sicherheitsprotokoll PROFIsafe genannt. Bei PROFIsafe wird ein 32 Bit Codename, welcher einer Adressbeziehung entspricht, zur eindeutigen Verbindungsidentifizierung genutzt. Die Codenamen können nicht weltweit eindeutig vergeben werden. Ein PROFIsafe Sicherheitsprotokoll über ein WAN (Wide Area Network) mit RT Class UDP kann daher derzeit nicht realisiert werden. Im Sinne der Erfindung ist unter RT Class UDP beispielsweise eine PROFINET Real Time Kommunikation die UDP (= IEEE 802.3) Services nutzt zu verstehen.

Es ist daher die Aufgabe der Erfindung eine funktional sicherheitsgerichtete Kommunikations-Adress-Sicherung bereitzustellen, die auch dann Sicherheit gewährleistet, wenn die Adressen im gesamten Netzwerk nicht eindeutig vergeben werden können.

Die der Erfindung zugrundeliegende Aufgabe wird dadurch gelöst, dass bei einem Verfahren zur funktional sicheren Verbindungsidentifizierung zwischen zwei Kommunikationsteilnehmern in einem Kommunikationssystem, wobei für eine Kommunikationsverbindung zwischen einem ersten Teilnehmer und einem zweiten Teilnehmer ein Verbindungsdatensatz erzeugt wird, welcher zumindest eine Adresskennung des zweiten Teilnehmers enthält, zusätzlich zur Adresskennung des zweiten Teilnehmers eine zufällig generierte Identifikationsnummer erzeugt wird und der Adresskennung des zweiten Teilnehmer in dem Verbindungsdatensatz zugeordnet wird, wobei die Adresskennung und die Identifikationsnummer zusammen als eine globale Adresse für den zweiten Teilnehmer genutzt werden. Wird beispielsweise bei einer PROFIsafeverbindung aus der Automatisierungstechnik neben dem Codenamen bzw. der Adresskennung auch eine zufällig generierte Identifikationsnummer der Länge r Bit zugeordnet, so ist sichergestellt, dass die Kombination aus der Adresskennung und der zufällig generierten Identifikationsnummer mit einer hinreichenden Wahrscheinlichkeit eindeutig ist. Für Verbindungen innerhalb eines lokalen Netzes könnte die Identifikationsnummer entfallen, solange sichergestellt ist, dass die Adresskennungen innerhalb des lokalen Netzes eindeutig sind, aber für die Verbindungen über die Grenzen eines lokalen Netzes hinweg ist nicht mehr gewährleistet, dass eine eindeutige Adresskennungvergabe existiert, aus diesem Grund wird durch die zusätzliche Identifizierungsnummer eine sichere Verbindungsidentifizierung zwischen zwei über die Grenzen ihrer lokalen Netze hinweg kommunizierenden Teilnehmern erreicht.

Die Identifikationsnummern sind nicht notwendigerweise weltweit eindeutig. Durch die zufällige Generierung ist sichergestellt, dass ein fehlgeleitetes Telegramm lediglich mit einer Wahrscheinlichkeit 2^{-r} vom Empfänger akzeptiert wird. Durch die Wahl des Parameters r kann eine Restfehlerwahrscheinlichkeit beliebig eingestellt werden. Für beispielsweise r = 32 ergibt sich eine Restfehlerwahrscheinlichkeit <3E-11. Diese Restfehlerwahrscheinlichkeit ist hinreichend, um beispielsweise in PROFIsafe-Anwendungen den höchsten Sicherheitslevel für die Fertigungs- und Prozessautomatisierung zu erreichen.

Ein auf Verbindungssicherheit ausgelegtes Kommunikationsprotokoll, wie beispielsweise bei PROFINET, stellt bereits selbst eine Adress-Sicherheit her, um Fehler in der Profinetverbindung zu erkennen. Die oben genannten Maßnahmen mit der zusätzlich zufällig generierten Identifikationsnummer reduzieren die Restfehlerwahrscheinlichkeit signifikant.

Eine Verwendung von Zufallszahlen anstelle von eindeutigen Unterscheidungsmerkmalen mit der Kenntnis, dass ein Fehlerfall aufgrund der geringen Restfehlerwahrscheinlichkeit nahezu unwahrscheinlich ist, wird hier mit Vorteil ausgenutzt. Hierdurch kann auch eine weltweite Organisation eines eindeutigen Unterscheidungsmerkmals, z.B. wie bei der MAC-Adressvergabe, entfallen.

Weiterhin werden in dem ersten Teilnehmer und in dem zweiten Teilnehmer die Adresskennung und die Identifikationsnummer hinterlegt. Die Adresskennung und die Identifikationsnummer sind damit vorzugsweise remanent (netzausfallsicher) in den Teilnehmern hinterlegt. Mit Vorteil wird das Verfahren beim Parametrieren und Konfigurieren der Teilnehmer des Kommunikationssystems genutzt, wobei das Kommunikationssystem ein Bussystem der Automatisierungstechnik ist. Bei der Parametrierung und Konfiguration von beispielsweise einer speicherprogrammierbaren Steuerung oder einer E/A-Baugruppe, wird bei einer ersten Adress-Zuweisung einer sicherheitsgerichteten Verbindung zusätzlich zu der Adresskennung die zufällig generierte Identifikationsnummer vergeben. Damit wird die Identifikationsnummer bei der ersten Adresszuweisung in den Teilnehmern der Kommunikationsbeziehung hinterlegt.

Wenn in Serienmaschinen mit identischen Programmen und damit mit identischen Verbindungsdatensätzen für jede Maschine der Serie bzw. für ihre Verbindungsdatensätze nur eine Identifikationsnummer erzeugt wird, ist das bereits ausreichend. Zuvor wurden bei Serienmaschinen zwischen den Kommunikationsnetzen Netztrenner installiert, die dafür sorgen, dass beispielsweise die PROFIsafe-Telegramme das lokale Netz einer Serienmaschine nicht verlassen können. Solange RT Class UDP nicht implementiert ist, können Router als Netztrenner fungieren. Nach einer Implementierung von RT Class UDP ist dies zukünftig nicht mehr möglich, wobei durch das Hinzufügen der zufällig generierten Identifikationsnummer nun wieder einer Eindeutigkeit mit hinreichend hoher Wahrscheinlichkeit über alle Serienmaschinen gegeben ist. Mit Vorteil kann nun die RT Class UDP Technik eingesetzt werden.

Weiterhin ist es vorteilhaft, wenn für das Kommunikationssystem ein sicherheitsgerichtetes Feldbusprotokoll für die Automatisierungstechnik verwendet wird.

Hinsichtlich einer Performance der sicherheitsgerichteten Kommunikation über alle Strecken, wie z.B. Feldbus, WLAN, Rückwandbus, ist es von besonderem Vorteil, wenn die zufällig generierte Identifikationsnummer ein 32 Bit (vergleiche 128 Bit bei IPV 6) Format hat. So kommt die zufällig generierte Identifikationsnummer mit einem relativ kleinen Zahlenbereich aus und ist dennoch aufgrund der geringen Restfehlerwahrscheinlichkeit sicher genug. Dadurch kann ein Performancegewinn beim Datendurchsatz erzielt werden.

Die eingangs genannte Aufgabe wird ebenfalls gelöst, durch ein Kommunikationssystem mit zumindest einem ersten Teilnehmer und einem zweiten Teilnehmer, umfassend einen Verbindungsdatensatz, welcher zumindest eine Adresskennung des zweiten Teilnehmers enthält, wobei zusätzlich zur Adresskennung des zweiten Teilnehmers eine zufällig generierte Identifikationsnummer vorhanden ist und der Adresskennung des zweiten Teilnehmers in dem Verbindungsdatensatz zugeordnet ist, wobei die Adresskennung und die Identifikationsnummer zusammen eine globale Adresse des zweiten Teilnehmers bilden.

Mit Vorteil weist das Kommunikationssystem ein Bussystem der Automatisierungstechnik auf. Insbesondere im Hinblick auf die sicherheitsgerichtete industrielle Automatisierung ist der erste Teilnehmer und der zweite Teilnehmer derart ausgeführt, dass zwischen dem ersten Teilnehmer und dem zweiten Teilnehmer eine sicherheitsgerichtete Kommunikation ausführbar ist, wobei mindestens ein Teilnehmer die Adresskennung als eine Adresse gemäß einem verwendeten funktional sicherheitsgerichteten Kommunikationsprotokoll aufweist. Die Teilnehmer sind dabei als fehlersichere Automatisierungskomponenten ausgestaltet. Vorzugsweise ist der erste Teilnehmer als eine fehlersichere speicherprogrammierbare Steuerung und der zweite Teilnehmer als eine fehlersichere E/A-Baugruppe ausgestaltet.

Mit der Zeichnung werden Ausführungsbeispiele der Erfindung vorgestellt. Es zeigt
- FIG 1: ein Kommunikationssystem umfassend ein erstes Bussystem und ein zweites Bussystem,
- FIG 2: ein Kommunikationssystem umfassend eine erste Serienmaschine und eine zweite Serienmaschine,
- FIG 3: einen Kommunikationsteilnehmer mit zwei Kommunikationsverbindungen zu unterschiedlichen weiteren Kommunikationsteilnehmern und
- FIG 4: das Verfahrensprinzip.

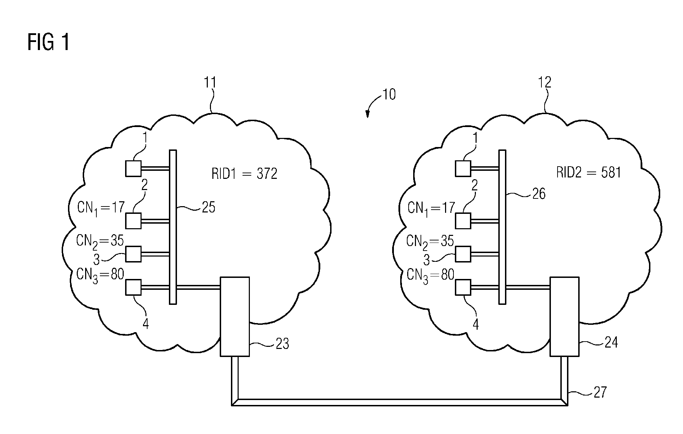

Gemäß FIG 1 ist ein Kommunikationssystem 10 mit einem ersten Bussystem 11 und einem zweiten Bussystem 12, wobei die Bussysteme 11,12 jeweils lokale Netze bilden, dargestellt. Das erste Bussystem 11 ist mit einem ersten Feldbus 25 an einem ersten Router 23 angeschlossen. Der erste Router 23 steht wiederum in Verbindung mit einem zweiten Router 24. An dem zweiten Router 24 ist das zweite Bussystem 12 mit einem zweiten Feldbus 26 angeschlossen. Der erste Router 23 und der zweite Router 24 sind über ein übergeordnetes Datennetz 27 miteinander verbunden.

Das erste Bussystem 11 weist einen ersten Teilnehmer 1, einen zweiten Teilnehmer 2, einen dritten Teilnehmer 3 und einen vierten Teilnehmer 4 auf, welche alle an den ersten Feldbus 25 angeschlossen sind. Im Sinne der PROFIBUS oder PROFINET Spezifikation ist der erste Teilnehmer 1 als ein F-Host ausgestaltet und die Teilnehmer 2,3,4 sind als F-Devices ausgestaltet. F-Host und F-Device bedeuten in diesem Falle fehlersichere Automatisierungskomponenten.

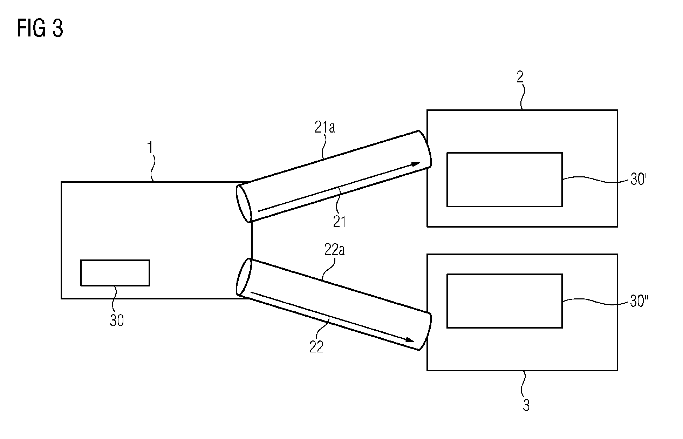

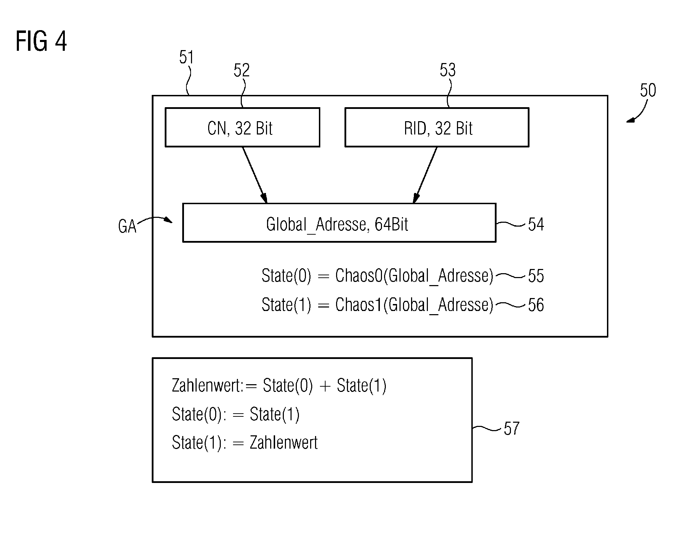

Für das Verfahren zur funktional sicheren Verbindungsidentifizierung zwischen den Teilnehmern 1,2,3,4 werden vorzugsweise mit einem Parametriertool, wie beispielsweise einer Engineeringstation, Kommunikationsverbindungen zwischen den Teilnehmern parametriert. Bei einem Erzeugen der Kommunikationsverbindung zwischen dem ersten Teilnehmer 1 und dem zweiten Teilnehmer 2 wird ein Verbindungsdatensatz 30 (siehe FIG 3) erzeugt. Dieser Verbindungsdatensatz 30 enthält für den zweiten Teilnehmer 2 zumindest eine erste Adresskennung CN1. Für den dritten Teilnehmer 3 wird eine Adresskennung CN2 vergeben und für den vierten Teilnehmer 4 wird eine Adresskennung CN3 vergeben. Zusätzlich zur ersten Adresskennung CN1 des zweiten Teilnehmers 2 wird eine zufällig generierte Identifikationsnummer RID erzeugt und der Adresskennung CN1 des zweiten Teilnehmers 2 in dem Verbindungsdatensatz 30 zugeordnet, wobei die Adresskennung CN1 und die Identifikationsnummer RID zusammen als eine globale Adresse GA (siehe FIG 4) genutzt werden.

In dem ersten Bussystem 11 sind die an dem ersten Feldbus 25 angeschlossenen Teilnehmer 2,3,4 durch unterschiedliche Adresskennungen CN1,CN2,CN3 eindeutig adressiert. So weist der zweite Teilnehmer 2 die erste Adresskennung CN1 = 17, der dritte Teilnehmer 3 die zweite Adresskennung CN2 = 35 und der vierte Teilnehmer 4 die dritte Adresskennung CN3 = 80 auf. Um die Adressen des ersten Bussystems 11 gegenüber einem zweiten Bussystem 12 eindeutig zu machen, weist das erste Bussystem 11 eine erste Identifikationsnummer RID1 = 372 auf.

Das zweite Bussystem 12, welches ein zweites lokales Netz bildet, ist prinzipiell analog zu dem ersten Bussystem 11 aufgebaut. Auch hier ist ein erster Teilnehmer 1 als ein F-Host ausgestaltet und ein zweiter Teilnehmer 2, ein dritter Teilnehmer 3 und ein vierter Teilnehmer 4 sind als F-Devices ausgestaltet, welche gemeinsam an einem zweiten Feldbus 26 angeschlossen sind. Die Teilnehmer 2,3,4 weisen dieselben Adresskennungen CN1,CN2,CN3 wie in dem ersten Bussystem 11 auf.

Zwar ist das erste Bussystem 11 und das zweite Bussystem 12 über den ersten Router 23 und den zweiten Router 24 im Hinblick auf eine Eindeutigkeit der Adressierung voneinander entkoppelt, aber bei beispielsweise Fehlern in den Routern können u.U. global fehladressierte Telegramme zwischen den beiden Bussystemen 11,12 wechseln. Durch die Einführung der ersten Identifikationsnummer RID1 im ersten Bussystem 11 und der zweiten Identifikationsnummer RID2 im zweiten Bussystem 12 werden auch bei nicht global eindeutigen Adresskennungen global fehladressierte Telegramme zwischen den Bussystemen 11,12 mit genügend hoher Wahrscheinlichkeit erkannt.

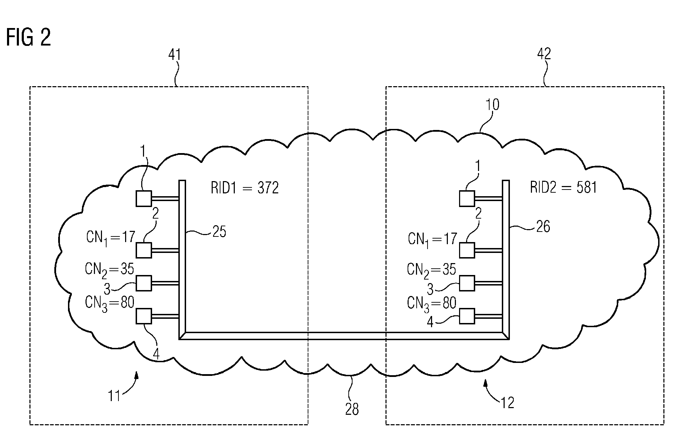

Analog zu der FIG 1 ist mit der FIG 2 ein erstes Bussystem 11 und ein zweites Bussystem 12 dargestellt, wobei nun das erste Bussystem 11 ein Bussystem einer ersten Serienmaschine 41 ist und das zweite Bussystem 12 ein Bussystem einer zweiten Serienmaschine 42 ist. Die Teilnehmer 1,2,3,4 des ersten Bussystems 11 sind mit ihren Adresskennungen CN1,CN2,CN3 und mit ihrer Parametrierung als F-Host und als F-Device genauso konfiguriert wie die Teilnehmer des Bussystems 11 gemäß FIG 1.

Auch die Teilnehmer des zweiten Bussystems 12 der zweiten Serienmaschine 42 sind genauso parametriert wie die Teilnehmer des zweiten Bussystems 12 gemäß FIG 1.

Diesmal aber ist das erste Bussystem 11 und das zweite Bussystem 12 über eine Busverbindung 28 direkt miteinander verbunden.

Auch hier zeigt sich wieder, bei einer Vergabe von gleichen Adresskennungen in unterschiedlichen Bussystemen, kann durch Hinzufügen von unterschiedlichen Identifikationsnummern RID1,RID2 eine eindeutige Adressierung in den unterschiedlichen Bussystemen gewährleistet werden.

Bei der Anwendung in der Serienmaschine wird für jede Maschine der Serie von beispielsweise einem Programmiergerät eine unterschiedliche Identifikationsnummer erzeugt. Mehrere Maschinen einer Serie können dann ohne Netztrenner in einem gemeinsamen Netz betrieben werden, obwohl sie identische Programme und identische Adresskennungen verwenden.

Die FIG 3 zeigt das Prinzip eines sicherheitsgerichteten Verbindungsaufbaus zwischen einem ersten Teilnehmer 1 und einem zweiten Teilnehmer 2 bzw. einem dritten Teilnehmer 3. Der erste Teilnehmer 1 ist beispielsweise als eine auf Sicherheit ausgelegte CPU ausgestaltet und weist den Verbindungsdatensatz 30 auf. In dem Verbindungsdatensatz 30 befindet sich ein Adressspeicher mit der ersten Adresskennung CN1, der zweiten Adresskennung CN2 und einer zufällig erzeugten Identifikationsnummer.

Über eine erste Kommunikationsverbindung 21 kann der erste Teilnehmer 1 mit dem zweiten Teilnehmer 2 eine Verbindung aufbauen. Dabei wird der zweite Teilnehmer 2 durch den ersten Teilnehmer 1 mit einer globalen Adresse GA, welche sich aus der ersten Adresskennung CN1 und der zufällig erzeugten Identifikationsnummer zusammensetzt angesprochen. Für den Verbindungsaufbau und eine spätere Kommunikation des ersten Teilnehmers 1 und des zweiten Teilnehmers 2 wird ein erstes Telegramm 21a eines sicherheitsgerichteten Protokolls, beispielsweise PROFIsafe genutzt. In dem zweiten Teilnehmer 2 ist ebenfalls ein Verbindungsdatensatz 30' hinterlegt. Auch in dem dritten Teilnehmer 3 ist ein Verbindungsdatensatz 30'' hinterlegt. Der Verbindungsdatensatz 30' des zweiten Teilnehmers 2 weist in seinen Adressspeicher die erste Adresskennung CN1 und die zufällig erzeugte Identifikationsnummer auf und der dritte Teilnehmer 3 weist in seinem Verbindungsdatensatz 30'' im Adressspeicher die zweite Adresskennung CN2 und die zufällig erzeugte Identifikationsnummer auf.

Der erste Teilnehmer 1 spricht den dritten Teilnehmer 3 über eine zweite Kommunikationsverbindung 22 an, wobei die zweite Kommunikationsverbindung ebenfalls wie die erste Kommunikationsverbindung getunnelt ist. Die Tunnelung zeichnet sich durch ein zweites Telegramm 22a eines sicherheitsgerichteten Protokolls, beispielsweise PROFIsafe aus.

Gemäß FIG 4 ist ein Verfahrensprinzip 50 zur funktional sicheren Verbindungsidentifizierung zwischen zwei Kommunikationsteilnehmern in einem Kommunikationssystem dargestellt. In einem Initialisierungsschritt 51 wird eine zuvor projektierte Adresskennung 52, welche im 32 Bit Format hinterlegt ist und eine erzeugte 32 Bit Zufallszahl 53 in einer Adressrechnung 54 zu einer globalen Adresse GA zusammengefasst. Die globale Adresse GA liegt nun im 64 Bit Format vor. In einem ersten Funktionsaufruf 55 wird aus der globalen Adresse GA mit Hilfe einer Chaos-Funktion ein erster Initialwert für einen MNR-Zahlengenerator gebildet.

In einen zweiten Funktionsaufruf 56 wird die globale Adresse GA mit Hilfe einer Chaos-Funktion auf einen zweiten Initialwert abgebildet. Die Chaos-Funktion verhindert, dass ähnliche globale Adressen auf ähnliche Initialwerte abgebildet werden.

Anschließend erfolgt eine zyklische Berechnung 57. Für jedes neue Telegramm erfolgt immer wieder eine neue Berechnung gemäß der bekannten sicherheitsgerichteten Kommunikation.

Die zufällig erzeugte Identifikationsnummer kann beispielsweise aus der Uhrzeit zum Zeitpunkt der Anforderungen der Identifikationsnummer gewonnen werden. Bei einer Konfiguration als F-Host und F-Device bilden die Adresskennung CN und die zufällig erzeugte Identifikationsnummer die globale Adresse GA. Diese wird bei der Initialisierung des für PROFIsafe verwendeten MNR-Zahlengenerators verwendet:
State(0) = Chaos0(Global_Adresse),
State(1) = Chaos1(Global_Adresse).

Der Zahlengenerator benutzt als Initialisierung zumindest einen der Werte State(0) und State(1). Zur Funktionsweise des Zahlengenerators sei der Fachmann auf die PROFIsafe Spezifikation V2.6.1 verwiesen (MNR = Monitoring Number).

## Patentansprüche

1. Verfahren zur funktional sicheren Verbindungsidentifizierung zwischen zwei Kommunikationsteilnehmern (1,2) in einem Kommunikationssystem (10), wobei für eine Kommunikationsverbindung (21) zwischen einem ersten Teilnehmer (1) und einem zweiten Teilnehmer (2) ein Verbindungsdatensatz (30) erzeugt wird, welcher zumindest eine Adresskennung (CN) des zweiten Teilnehmers (2) enthält,
**dadurch gekennzeichnet, dass** zusätzlich zur Adresskennung (CN) des zweiten Teilnehmers (2) eine zufällig generierte Identifikationsnummer (RID) erzeugt wird und der Adresskennung (CN) des zweiten Teilnehmers (2) in dem Verbindungsdatensatz (30) zugeordnet wird, wobei die Adresskennung (CN) und die Identifikationsnummer (RID) zusammen als eine globale Adresse (GA) für den zweiten Teilnehmer (2) genutzt werden.

2. Verfahren nach Anspruch 1, wobei in dem ersten Teilnehmer (1) und in dem zweiten Teilnehmer (2) die Adresskennung (CN) und die Identifikationsnummer (RID) hinterlegt werden.

3. Verfahren nach Anspruch 1 oder 2, welches beim Parametrieren und Konfigurieren der Teilnehmer (1,2) des Kommunikationssystems genutzt wird, wobei das Kommunikationssystem ein Bussystem (11,12) der Automatisierungstechnik ist.

4. Verfahren nach Anspruch 3, wobei die Identifikationsnummer (RID) bei einer ersten Adresszuweisung von Automatisierungskomponenten in dem Bussystem (11,12) der Automatisierungstechnik erzeugt wird.

5. Verfahren nach Anspruch 3 oder 4, wobei für den Einsatz des Bussystems (11,12) in Serienmaschinen (41,42) mit identischen Programmen und damit mit identischen Verbindungsdatensätzen (30) es ausreichend ist für jede Maschine der Serie bzw. für ihre Verbindungsdatensätze (30) nur eine Identifikationsnummer (RID) zu erzeugen.

6. Verfahren nach einem der Ansprüche 1 bis 5, wobei für das Kommunikationssystem (10) ein sicherheitsgerichtetes Feldbusprotokoll für die Automatisierungstechnik verwendet wird.

7. Kommunikationssystem (10) mit zumindest einem ersten Teilnehmer (1) und einem zweiten Teilnehmer (2), umfassend einen Verbindungsdatensatz (30), welcher zumindest eine Adresskennung (CN) des zweiten Teilnehmers (2) enthält, **dadurch gekennzeichnet, dass** zusätzlich zur Adresskennung (CN) des zweiten Teilnehmers (2) eine zufällig generiete Identifikationsnummer (RID) vorhanden ist und der Adresskennung (CN) des zweiten Teilnehmers (2) in dem Verbindungsdatensatz (30) zugeordnet ist, wobei die Adresskennung (CN) und die Identifikationsnummer (RID) zusammen eine globale Adresse (GA) des zweiten Teilnehmers (2) bilden.

8. Kommunikationssystem (10) nach Anspruch 7, mit einem Bussystem (11,12) der Automatisierungstechnik.

9. Kommunikationssystem (10) nach Anspruch 8, wobei der erste Teilnehmer (1) und der zweite Teilnehmer (2) derart ausgeführt sind, dass zwischen dem ersten Teilnehmer (1) und dem zweiten Teilnehmer (2) eine sicherheitsgerichtete, getunnelte Kommunikation ausführbar ist, wobei mindestens ein Teilnehmer (2) die Adresskennung (CN) als eine Adresse gemäß einem verwendeten funktional sicherheitsgerichteten Kommunikationsprotokoll aufweist.

10. Kommunikationssystem (10) nach einem der Ansprüche 7 bis 9, wobei die Teilnehmer (1,2) als fehlersichere Automatisierungskomponenten ausgestaltet sind.

11. Kommunikationssystem (10) nach Anspruch 10, wobei der erste Teilnehmer (1) als eine fehlersichere speichprogrammierbare Steuerung und der zweite Teilnehmer (2) als eine fehlersichere Ein/Ausgabe-Baugruppe ausgestaltet ist.

12. Kommunikationssystem (10) nach Anspruch 10, wobei der erste Teilnehmer (1) und der zweite Teilnehmer (2) jeweils als eine fehlersichere speicherprogrammierbare Steuerung ausgestaltet ist.
